# EUROPEAN PATENT APPLICATION

(11) **EP 1 505 114 A1**
(43) Date of publication of application: **09.02.2005**
(21) Application number: 04017457.5
(22) Date of filing: 23.07.2004
(51) Int. Cl.: C08L 15/00, C08K 5/45

(54) **HNBR compounds having an improved flowability**

(30) Priority: 05.08.2003 CA 2436586
(71) Applicant: Bayer Inc., Sarnia, ON N7T 7M2 (CA)
(72) Inventor: Guerin, Frederic, Petrolina Ontario NON 1RO (CA)
(74) Representative: Bailly, Peter, Dr.

(57) **Abstract**

The present invention relates to a composition having an improved flowability comprising at least one hydrogenated nitrile rubber, a method of improving the flowability of compositions comprising at least one hydrogenated nitrile rubber and a method of improving the fluid aging of compositions comprising at least one hydrogenated nitrile rubber.

## Description

### Field of the Invention

The present invention relates to a composition having an improved flowability comprising at least one hydrogenated nitrile rubber, a method of improving the flowability of compositions comprising at least one hydrogenated nitrile rubber and a method of improving the fluid aging of compositions comprising at least one hydrogenated nitrile rubber.

### Background of the Invention

Hydrogenated nitrile rubber (HNBR), prepared by the selective hydrogenation of acrylonitrile-butadiene rubber (nitrile rubber; NBR, a copolymer comprising at least one conjugated diene, at least one unsaturated nitrile and optionally further comonomers), is a specialty rubber which has very good heat resistance, excellent ozone and chemical resistance, and excellent oil resistance. Coupled with the high level of mechanical properties of the rubber (in particular the high resistance to abrasion) it is not surprising that NBR and HNBR have found widespread use in the automotive (seals, hoses, bearing pads) oil (stators, well head seals, valve plates), electrical (cable sheathing), mechanical engineering (wheels, rollers) and shipbuilding (pipe seals, couplings) industries, amongst others.

Commercially available HNBR has a Mooney viscosity in the range of from 55 to 105, a molecular weight in the range of from 200,000 to 500,000 g/mol, a polydispersity greater than 3.0 and a residual double bond (RDB) content in the range of from 1 to 18% (by IR spectroscopy).

One limitation in processing HNBR is the relatively high Mooney viscosity. In principle, HNBR having a lower molecular weight and lower Mooney viscosity would have better processability. Attempts have been made to reduce the molecular weight of the polymer by mastication (mechanical breakdown) and by chemical means (for example, using strong acid), but such methods have the disadvantages that they result in the introduction of functional groups (such as carboxylic acid and ester groups) into the polymer, and the altering of the microstructure of the polymer. This results in disadvantageous changes in the properties of the polymer.

GB-A-2,019,413 discloses rubber compositions comprising organosiloxanes with hydrocarbon radical having more than 4 carbon atoms. However, hydrogenated nitrile rubbers and organosiloxanes with at least one hydrocarbon radical having less than 4 carbon atoms are not disclosed and the teachings of the reference are limited to improvements of heat stability.

US-3,332,900 discloses adducts of siloxanes and isocyanates. However, hydrogenated nitrile rubbers are not disclosed.

EP-A-0 045 641 discloses vinyl resin compositions comprising organosiloxanes. However, there is no mention of hydrogenated nitrile rubbers.

US-3,450,736 discloses modifies siloxane polymers and compositions containing same. However, hydrogenated nitrile rubbers are not disclosed.

EP-A-0 243 514 discloses a process for production of rubber compositions comprising organosiloxanes as processing aid. However, hydrogenated nitrile rubbers are not disclosed.

### Summary of the Invention:

The present invention provides a composition having an improved flowability comprising at least one hydrogenated nitrile rubber and at least one organopolysiloxane with at least one hydrocarbon radical having less than four carbon atoms. The invention also provides a method of improving the flowability of compositions comprising at least one hydrogenated nitrile rubber by adding at least one organopolysiloxane with at least one hydrocarbon radical having less than four carbon atoms to said composition. In still a further aspect, the invention provides a method of improving the fluid aging of compositions comprising at least one hydrogenated nitrile rubber by adding at least one organopolysiloxane with at least one hydrocarbon radical having less than four carbon atoms to said composition.

### Detailed Description of the Invention

As used throughout this specification, the term "nitrile rubber" or NBR is intended to have a broad meaning and is meant to encompass a copolymer comprising repeating units derived from at least one conjugated diene, at least one alpha,beta-unsaturated nitrile and optionally further one or more copolymerizable monomers.

Hydrogenated nitrile rubber (HNBR) in this invention is understood by more than 50 % of the residual double bonds (RDB) present in the nitrile rubber/NBR being hydrogenated, preferably more than 90 % of the RDB are hydrogenated, more preferably more than 95 % of the RDB are hydrogenated and most preferably more than 99 % of the RDB are hydrogenated.

The conjugated diene may be any known conjugated diene in particular a C₄-C₆ conjugated diene. Preferred conjugated dienes are butadiene, isoprene, piperylene, 2,3-dimethyl butadiene and mixtures thereof. Even more preferred C₄-C₆ conjugated dienes are butadiene, isoprene and mixtures thereof. The most preferred C₄-C₆ conjugated diene is butadiene.

The alpha,beta-unsaturated nitrile may be any known alpha,beta-unsaturated nitrile, in particular a C₃-C₅ alpha,beta-unsaturated nitrile. Preferred C₃-C₅ alpha,beta-unsaturated nitriles are acrylonitrile, methacrylonitrile, ethacrylonitrile and mixtures thereof. The most preferred C₃-C₅ alpha,beta-unsaturated nitrile is acrylonitrile.

Preferably, the copolymer comprises in the range of from 40 to 85 weight percent of repeating units derived from one or more conjugated dienes and in the range of from 15 to 60 weight percent of repeating units derived from one or more unsaturated nitriles. More preferably, the copolymer comprises in the range of from 60 to 75 weight percent of repeating units derived from one or more conjugated dienes and in the range of from 25 to 40 weight percent of repeating units derived from one or more unsaturated nitriles. Most preferably, the copolymer comprises in the range of from 60 to 70 weight percent of repeating units derived from one or more conjugated dienes and in the range of from 30 to 40 weight percent of repeating units derived from one or more unsaturated nitriles.

Optionally, the copolymer may further comprise repeating units derived from one or more copolymerizable monomers, such as unsaturated carboxylic acids. Non-limiting examples of suitable unsaturated carboxylic acids are fumaric acid, maleic acid, acrylic acid, methacrylic acid and mixtures thereof. Repeating units derived from one or more copolymerizable monomers will replace either the nitrile or the diene portion of the nitrile rubber and it will be apparent to the skilled in the art that the above mentioned figures will have to be adjusted to result in 100 weight percent. In case of the mentioned unsaturated carboxylic acids, the nitrile rubber preferably comprises repeating units derived from one or more unsaturated carboxylic acids in the range of from 1 to 10 weight percent of the rubber, with this amount displacing a corresponding amount of the conjugated diolefin.

Other preferred optionally further monomers are unsaturated mono- or di-carboxylic acids or derivatives thereof (e.g., esters, amides and the like) including mixtures thereof.

Examples of suitable HNBR include Therban® A3407, Therban® C3467 or Therban® A3907 all available from Bayer Inc., Canada.

The HNBR may be used alone or in combination with other elastomers such as:
BR - polybutadiene
ABR - butadiene/C₁-C₄ alkyl acrylate copolymers
CR - polychloroprene
IR - polyisoprene
SBR - styrene/butadiene copolymers with styrene contents of 1 to 60, preferably 20 to 50 wt.%
IIR - isobutylene/isoprene copolymers
NBR - butadiene/acrylonitrile copolymers with acrylonitrile contents of 5 to 60, preferably 10 to 40 wt.%
EPDM - ethylene/propylene/diene copolymers

The organopolysiloxane may be any known organopolysiloxane with at least one hydrocarbon radical having less than four carbon atoms, preferably all hydrocarbon radicals have less than four carbon atoms. Preferred organopolysiloxanes will have the general structure (I)

R₂R'SiO-(RR'SiO)ₘ-(R"₂SiO)ₙ-SiR'R₂ (I)

wherein R and R' and R" may be the same or different and are independently a substituted or unsubstituted monovalent hydrocarbon radical with in the range of from 1 to 3 carbon atoms, and m/n is equal or less than 1, in particular equal or less than 0.1, even more particular equal or less than 0.01. More preferably, the organopolysiloxane will have a cyclic or straight-chain structure without cross-linking between the chains. Preferably R and R' and R" are selected from the group consisting of methyl, ethyl, propyl, vinyl. Most preferably, the organopolysiloxane is polydimethylsiloxane (PDMS) with the general structure (I) in which R and R" are methyl and R' is an organic substituent with less than 4 carbon atoms, such as methyl, ethyl, n-propyl, isopropyl, vinyl. The viscosity of the organopolysiloxane is not critical, preferably, the viscosity is in the range of from 500 to 250000 mPa.s.

Suitable organopolysiloxanes include PS 447™, a vinyl dimethyl terminated polydimethylsiloxane from United Technology. PS 047™, a trimethyl terminated polydimethylsiloxane from United Technology, Silopren™ U1 and U165, vinyl dimethyl terminated polydimethylsiloxanes from GE-Bayer Silicones.

Composition of the inventive composition may vary in wide ranges. Preferably, the composition comprises in the range of from 1 to 20 phr of the organopolysiloxane, more preferably 1 to 10 phr, most preferably 3 to 7 phr.

The composition further may comprise one or more fillers.

The filler may be non-mineral or mineral fillers. Examples of mineral fillers include silica, silicates, clay (such as bentonite), gypsum, alumina, titanium dioxide, talc and the like, as well as mixtures thereof.

Further examples are:
- highly disperse silicas, prepared e.g. by the precipitation of silicate solutions or the flame hydrolysis of silicon halides, with specific surface areas of 5 to 1000, preferably 20 to 400 m²/g (BET specific surface area), and with primary particle sizes of 10 to 400 nm; the silicas can optionally also be present as mixed oxides with other metal oxides such as those of Al, Mg, Ca, Ba, Zn, Zr and Ti;
- synthetic silicates, such as aluminum silicate and alkaline earth metal silicate like
- magnesium silicate or calcium silicate, with BET specific surface areas of 20 to 400 m²/g and primary particle diameters of 10 to 400 nm;
- natural silicates, such as kaolin and other naturally occurring silica;
- glass fibres and glass fibre products (matting, extrudates) or glass microspheres;
- metal oxides, such as zinc oxide, calcium oxide, magnesium oxide and aluminium oxide;
- metal carbonates, such as magnesium carbonate, calcium carbonate and zinc carbonate;
- metal hydroxides, e.g. aluminium hydroxide and magnesium hydroxide;
or combinations thereof.

Suitable silica fillers are available under the trademarks HiSil® 210, HiSil® 233 and HiSil® 243 from PPG Industries Inc. Also suitable are Vulkasil® S and Vulkasil® N, from Bayer AG.

Non-mineral fillers may be carbon blacks such as carbon blacks prepared by the lamp black, furnace black or gas black process, e.g. SAF, ISAF, HAF, FEF or GPF carbon blacks.

Optionally, the present rubber composition further comprises a carbodiimide, a polycarbodiimide or mixtures thereof. The preferred carbodiimide is available commercially under the tradenames Rhenogram™ P50 and Stabaxol™ P. This ingredient may be used in the present rubber composition in an amount in the range of from 0 to about 15 parts by weight, more preferably in the range of from 0 to about 10 parts by weight, even more preferably in the range of from about 0 to about 2 parts by weight.

Optionally, the inventive rubber composition further comprises an acrylic compound. As used throughout this specification, the term "acrylic compound" is intended to have a broad meaning and is meant to encompass compounds of the general structure [R-CH=CR'COO⁻]ₙ Mⁿ⁺ wherein R and R' are aliphatic or aromatic hydrocarbon groups or hydrogen and are independently selected and are the same or different from each other and M is a metal ion selected from group 2, 12 or 13 (IUPAC 1985) and n is an integer of 2 or 3 as well as liquid acrylates, such as trimethylolpropanetrimethacrylate (TRIM), butanedioldimethacrylate (BDMA) and ethylenglycoldimethacrylate (EDMA). Particular reference is made to acrylates known from EP-A1-0 319 320, in particular p. 3, I. 16 to 35, from US-5 208 294, in particular Col. 2, I. 25 to 40, and from US-4 983 678, in particular Col. 2, I. 45 to 62. Preferred are zinc acrylate, zinc diacrylate or zinc dimethacrylate or a liquid acrylate. It might be advantageous to use a combination of different acrylates and/or metal salts thereof.

In the inventive rubber composition acrylic compounds are present in an amount in the range of from 0 to 100 phr (=parts per hundred parts of rubber), preferably 0.1 to 20 phr, more preferably 0.2 - 7 phr.

The inventive rubber composition may comprise one or more vulcanization agents or curing systems. The invention is not limited to a special curing system, however, peroxide curing system(s) are preferred. Furthermore, the invention is not limited to a special peroxide curing system. For example, inorganic or organic peroxides are suitable. Preferred are organic peroxides such as dialkylperoxides, ketalperoxides, aralkylperoxides, peroxide ethers, peroxide esters, such as di-tert.-butylperoxide, bis-(tert.-butylperoxyisopropyl)-benzene, dicumylperoxide, 2,5-dimethyl-2,5-di(tert.-butylperoxy)-hexane, 2,5-dimethyl-2,5-di(tert.-butylperoxy)-hexene-(3), 1,1-bis-(tert.-butylperoxy)-3,3,5-trimethyl-cyclohexane, benzoylperoxide, tert.-butylcumylperoxide and tert.-butylperbenzoate. Usually the amount of peroxide in the composition is in the range of from 1 to 10 phr, preferably from 4 to 8 phr. Subsequent curing is usually performed at a temperature in the range of from 100 to 200 °C, preferably 130 to 180 °C. Peroxides might be applied advantageously in a polymer-bound form. Suitable systems are commercially available, such as Polydispersion T(VC) D-40 P from Rhein Chemie Rheinau GmbH, D (= polymerbound di-tert.-butylperoxy-isopropylbenzene).

The rubber composition according to the invention can contain further auxiliary products for rubbers, such as reaction accelerators, vulcanizing accelerators, vulcanizing acceleration auxiliaries, antioxidants, foaming agents, anti-aging agents, heat stabilizers, light stabilizers, ozone stabilizers, processing aids, plasticizers, tackifiers, blowing agents, dyestuffs, pigments, waxes, extenders, organic acids, inhibitors, metal oxides, and activators such as triethanolamine, polyethylene glycol, hexanetriol, etc., which are known to the rubber industry. The rubber aids are used in conventional amounts, which depend inter alia on the intended use. Conventional amounts are e.g. from 0.1 to 50 phr. Preferably the vulcanizable compound comprising said rubber compound further comprises in the range of 0.1 to 20 phr of one or more organic fatty acids as an auxiliary product, preferably an unsaturated fatty acid having one, two or more carbon double bonds in the molecule which more preferably includes 10% by weight or more of a conjugated diene acid having at least one conjugated carbon-carbon double bond in its molecule. Preferably those fatty acids have in the range of from 8-22 carbon atoms, more preferably 12-18. Examples include stearic acid, palmitic acid and oleic acid and their calcium-, zinc-, magnesium-, potassium- and ammonium salts.

The ingredients of the rubber composition are often mixed together, suitably at an elevated temperature that may range from 25 °C to 200 °C. Normally the mixing time does not exceed one hour and a time in the range from 2 to 30 minutes is usually adequate. The mixing of the rubber and the organopolysiloxane, optionally the filler(s), optionally vulcanization agent, and/or further ingredients is suitably carried out in an internal mixer such as a Banbury mixer, or a Haake or Brabender internal mixer. A two roll mill mixer also provides a good dispersion of the compounds within the final product. An extruder also provides good mixing, and permits shorter mixing times. It is possible to carry out the mixing in two or more stages, and the mixing can be done in different apparatus, for example one stage in an internal mixer and one stage in an extruder. However, it should be taken care that no unwanted pre-crosslinking (= scorch) occurs during the mixing stage. For compounding and vulcanization see also: Encyclopedia of Polymer Science and Engineering, Vol. 4, p. 66 et seq. (Compounding) and Vol. 17, p. 666 et seq. (Vulcanization).

The rubber composition is ideally suited to be processed by but not limited to molding injection technology. The rubber composition can also be useful to transfer molding, to compression molding, to liquid injection molding. The rubber composition comprising a cross-linking system is usually introduced in a conventional injection molding and injected into hot (about 160-230°C) forms where the cross-linking/vulcanization takes place depending on the rubber composition and temperature of the mold.

The rubber composition is very well suited for the manufacture of a shaped article, such as a seal, hose, bearing pad, stator, well head seal, valve plate, cable sheathing, wheel roller, pipe seal, in place gaskets or footwear component. Furthermore, they are very well suited for wire and cable production.

The rubber composition provides improved flowability, which provides better molding characteristics in processes such as injection molding, extrusion molding, compression molding. The improved processability results in increases flow rates, and parts with sharper edges and smoother surfaces. In addition, fluid aging behavior is improved over extractable plasticizer.

The invention is further illustrated in the following examples.

### Examples

### Description of tests:

The Mooney viscosity was measured according to ASTM D1646. The MDR was measured according to D5289. The stress-strain and fluid aging were measured according to D412 and D471 respectively. The capillary rheometry was measured using the Monsanto Processability Tester (MPT). The procedure is technically equivalent to the ASTM D-5099-93, Method A with the exceptions of the capillary dies specifications (barrel inside diameter: 19mm, barrel length: 25.4mm).

### Examples 1-7

### General Mixing Recipe:

Compounds were mixed on an open mil in a single mixing step using standard laboratory mixing procedures (40°C, 10 minutes mix). The formulations used in this assessment are based on a simplified peroxide recipe (Table 1).

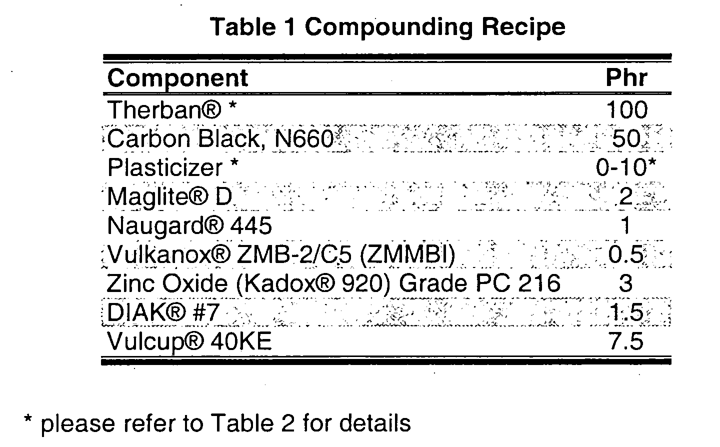

Carbon black N 660 Sterling-V available from Cabot Tire Blacks
Maglite® D is a MgO available from C.P. Hall.
Naugard® 445 is a diphenylamine available from Uniroyal Chemical.
Plasthall® TOTM is a Trioctyl trimellitate available from C.P. Hall.
Vulkanox® ZMB-2/C5 is a Zinc salt of 4- and 5-methyl-mercapto benzimidazole available from Bayer AG
DIAK #7 is a Triallylisocyanurate available from DuPont Dow Elastomers
Vulcup 40KE is 2,2'-bis (tert-butylperoxy di-isopropylbenzene) available from Harwick Standard.

**Table 2**

| **Details for Compounding Recipe for each Example** | | |
|---|---|---|
| **Example** | **Therban®** | **Plasticizer** |
| **1* (comp)** | Therban® A 3406 | 5 phr of Plasthall® TOTM |
| **2* (comp.)** | Therban® A 3406 | 5 phr of Struktol® WB-222 |
| **3** | Therban® A 3406 | 5 phr of PS 447® |
| **4** | Therban® A 3406 | 5 phr of Silopren® U5 |
| **5** | Therban® A 3406 | 5 phr of Silopren® U65 |
| **6** | Therban® A 3406 | 5 phr of Silopren® U165 |
| **7** | Therban® A 3406 | 5 phr of PS 047® |

| | | |
|---|---|---|
| * Examples 1 and 2 are for comparison | | |

PS 447™, a vinyl dimethyl terminated polydimethylsiloxane from United Technology, PS 047™, a trimethyl terminated polydimethylsiloxane from United Technology, Silopren™ U5, , U65 and U165, vinyl dimethyl terminated polydimethylsiloxanes from GE-Bayer Silicones, Struktol® WB-222 is a processing additive available from the Struktol Company

### Results

The compositions of Ex. 1-7 were tested for their properties. The results are listed in Table 3

### Discussion

The physical properties (as measured using stress-strain) the inventive compositions 3-7 or comparable to those of the comparative examples 1* and 2*. Compositions 3-7 shows similar flow properties as measured by capillary rheometry. The barrel pressure for the comparative examples is approximately 1.8 times higher then for the inventive compositions. The fluid aging results after 168 hours at 150°C in both ASTM Oil #1 and IRM 903 indicate that with soluble low molecular weight plasticizer like Plasthall TOTM, the extraction of TOTM from the polymer matrix in oil #1 results in a ∼2% weight loss (5 phr of TOTM calculates to 2.8%). In comparison, the control compound where no plasticizer was added to the formulation show a small positive weight change.

The polysiloxane additives on the other hand show a weight increase of approximately 1% indicating that they are not extracted from the polymer matrix.

**TABLE 3**

| **Example** | **1 *** | **2*** | **3** | **4** | **5** | **6** | **7** |
|---|---|---|---|---|---|---|---|
| **Compound Mooney Viscosity** | | | | | | | |
| **ML 1+4 @ 100ºC** | 82.7 | 76.6 | 87.4 | 89.4 | 86.0 | 87.8 | 88.9 |

| **MDR Cure Characteristics** | | | | | | | |
|---|---|---|---|---|---|---|---|
| *1.7 Hz, 1 ºarc, 180ºC, 30 min, 100 dNm* | | | | | | | |
| **MH (dN.m)** | 50.9 | 49.0 | 54.3 | 54.8 | 54.3 | 54.2 | 53.5 |
| **ML (dN.m)** | 2.4 | 2.5 | 2.8 | 3.0 | 2.8 | 2.9 | 2.8 |
| **Delta MH-ML (dN.m)** | 48.5 | 46.5 | 51.5 | 51.9 | 51.5 | 51.3 | 50.7 |

| **Stress Strain (Dumbells)** | | | | | | | |
|---|---|---|---|---|---|---|---|
| **Cure Time @ 180ºC (min)** | 13 | 12 | 12 | 12 | 12 | 12 | 12 |
| **Ultimate Tensile (MPa)** | 24.7 | 26.0 | 23.6 | 24.1 | 25.2 | 25.2 | 23.2 |
| **Ultimate Elongation (%)** | 254 | 283 | 230 | 233 | 223 | 225 | 219 |
| **Hardness Shore A2 (pts.)** | 65 | 68 | 67 | 68 | 68 | 68 | 67 |

| **Aged in ASTM Oil #1 @ 150°C for 168h** | | | | | | | |
|---|---|---|---|---|---|---|---|
| **Hardness Shore A2 (pts.)** | 67 | 68 | 67 | 67 | 68 | 68 | 69 |
| **Ultimate Tensile (MPa)** | 24.8 | 25.0 | 26.2 | 25.1 | 23.7 | 25.2 | 25.6 |
| **Ultimate Elongation (%)** | 211 | 218 | 214 | 204 | 179 | 199 | 203 |
| **Chg. Hard. Shore A2 (pts.)** | 2 | 0 | 0 | -1 | 0 | 0 | 2 |
| **Chg. Ulti. Tens. (%)** | 1% | -4% | 11% | 4% | -6% | 0% | 10% |
| **Chg. Ulti. Elong. (%)** | -17% | -23% | -7% | -12% | -20% | -12% | -7% |
| **Wt. Change (%)** | -2.0 | -1.3 | 1.1 | 1.1 | 1.1 | 1.0 | 1.0 |
| **Vol. Change (%)** | -2.1 | -1.3 | 1.6 | 1.4 | 1.5 | 1.3 | 1.0 |

| **Aged in IRM 903 @ 150°C for 168h** | | | | | | | |
|---|---|---|---|---|---|---|---|
| **Hardness Shore A2 (pts.)** | 60 | 54 | 61 | 62 | 62 | 61 | 61 |
| Ultimate Tensile (MPa) | 21.5 | 19.7 | 20.0 | 15.6 | 18.9 | 20.0 | 17.9 |
| **Ultimate Elongation (%)** | 209 | 199 | 174 | 152 | 172 | 178 | 169 |
| **Chg. Hard. Shore A2 (pts.)** | -5 | -14 | -6 | -6 | -6 | -7 | -6 |
| **Chg. Ulti. Tens. (%)** | -13% | -24% | -15% | -35% | -25% | -21% | -23% |
| **Chg. Ulti. Elong. (%)** | -18% | -30% | -24% | -35% | -23% | -21% | -23% |
| **Wt. Change (%)** | 12.1 | 13.6 | 15.9 | 16.4 | 16.0 | 16.3 | 16.3 |
| **Vol. Change (%)** | 14.9 | 16.5 | 19.4 | 19.9 | 19.5 | 19.7 | 19.4 |

| **Capillary Rheometry @ 100°C** | | | | | | | |
|---|---|---|---|---|---|---|---|
| **Pressure @ 28.9 s**^{**-1**}(psi) | 5610 | 1010 | 1400 | 1200 | 1350 | 1390 | 1360 |
| **Pressure @ 101.2 s**^{**-1**}(psi) | 7220 | 3230 | 2170 | 1720 | 2120 | 2190 | 2050 |
| **Pressure @ 300 s**^{**-1**}(psi) | 7610 | 5350 | 3140 | 2730 | 3170 | 3220 | 3090 |
| **Pressure @ 1001.3 s**^{**-1**}(psi) | 8910 | 8910 | 4900 | 4770 | 4910 | 4900 | 4810 |
| **Pressure @ 3005.6 s**^{**-1**}(psi) | 8660 | N.A.^{a} | 8470 | 8800 | 8710 | 8390 | 8520 |
| **Pressure @ 9991.2 s**^{**-1**}(psi) | 13730 | | 12990 | N.A.^{a} | N.A.^{a} | 12910 | 13260 |

| | | | | | | | |
|---|---|---|---|---|---|---|---|
| ^{**a**} **Outside upper limit of instrument** | | | | | | | |

## Claims

1. A composition comprising at least one hydrogenated nitrile rubber and at least one organopolysiloxane with at least one hydrocarbon radical having less than four carbon atoms.

2. A composition according to claim 1, wherein the organopolysiloxane has at least one hydrocarbon radical having less than four carbon atoms and has the general structure (I)
R"₂R'SiO-(R"R'SiO)ₘ-(R"₂SiO)ₙ-SiRR"₂ (I)
wherein R and R' and R" may be the same or different and are independently a substituted or unsubstituted monovalent hydrocarbon radical with in the range of from 1 to 3 carbon atoms, and m/n is equal or less than 1.

3. A composition according to claim 2 wherein the organopolysiloxane is polydimethylsiloxane (PDMS).

4. A composition according to any of claims 1-3, wherein the hydrogenated nitrile rubber comprises repeating units derived from at least one conjugated diene, at least one alpha,beta-unsaturated nitrile and optionally further one or more copolymerizable monomers.

5. A composition according to any of claims 1-4 further comprising one or more fillers and/or one or more vulcanization agents or curing systems.

6. A composition having an improved flowability according to any of claims 1-5.

7. A composition having an improved fluid aging resistance according to any of claims 1-5.

8. In a method of improving the flowability of compositions comprising at least one hydrogenated nitrile rubber by adding at least one organopolysiloxane with at least one hydrocarbon radical having less than four carbon atoms to said composition.

9. In a method of improving the fluid aging of compositions comprising at least one hydrogenated nitrile rubber by adding at least one organopolysiloxane with at least one hydrocarbon radical having less than four carbon atoms to said composition.

10. A manufacturing process for a shaped article wherein a composition according to any of claims 1-7 is subjected to injection molding, extrusion molding or compression molding.
